# FASCICULE DE BREVET EUROPEEN

(11) **EP 1 490 879 B1**
(45) Date de publication et mention de la délivrance du brevet: **01.10.2008**
(21) Numéro de dépôt: 03735788.6
(22) Date de dépôt: 25.03.2003
(51) Int. Cl.: G21C 3/322, G21C 3/356

(54) **GRILLE ENTRETOISE D UN ASSEMBLAGE DE COMBUSTIBLE POUR UN REA CTEUR NUCLEAIRE REFROIDI PAR DE L EAU LEGERE.**
ABSTANDHALTERGITTER ALS TEIL EINES BRENNSTABBÜNDELS ZUM EINSATZ IN EINEM LEICHTWASSERGEKÜHLTEN KERNREAKTOR
SPACER GRID FOR A FUEL UNIT IN A NUCLEAR REACTOR COOLED BY LIGHT WATER

(30) Priorité: 29.03.2002 FR 0204034
(43) Date de publication de la demande: 29.12.2004
(73) Titulaire: Areva NP, 92400 Courbevoie (FR)
(72) Inventeur: BONNAMOUR, Bruno, F-69100 Villeurbanne (FR); BONNAMOUR, Michel, F-69008 Lyon (FR); GAUTHIER, Jacques, F-69270 Cailloux sur Fontaines (FR)
(74) Mandataire: Bouget, Lucien
(86) Numéro de dépôt international: PCT/FR2003/000945
(87) Numéro de publication internationale: WO 2003/083877

(56) Documents cités:
- EP-A- 0 237 064
- EP-A- 0 308 701
- EP-A- 0 455 847
- EP-A- 0 534 254
- DE-C- 19 916 893
- FR-A- 2 531 258
- FR-A- 2 541 810
- US-A- 3 764 470
- US-A- 3 933 584

## Description

L'invention concerne une grille-entretoise d'un assemblage de combustible pour un réacteur nucléaire refroidi par de l'eau légère.

Les réacteurs nucléaires refroidis par de l'eau légère et en particulier les réacteurs nucléaires refroidis par de l'eau sous pression utilisent des assemblages de combustible comportant un faisceau de crayons combustibles maintenus par une ossature dans des dispositions parallèles entre elles.

L'ossature de l'assemblage de combustible comporte en particulier une pluralité de grilles-entretoises réparties suivant la longueur de l'assemblage de combustible, dans la direction axiale du faisceau de crayons. Les grilles-entretoises assurent le maintien transversal des crayons et comportent un ensemble de cellules juxtaposées et disposées suivant un réseau régulier, généralement à mailles carrées, les cellules ayant elles-mêmes une section de forme carrée dans un plan transversal de la grille-entretoise perpendiculaire à l'axe des crayons. Chacune des cellules est délimitée et séparée des cellules voisines par une paroi périphérique ayant la forme de la surface latérale d'un parallélépipède à base carrée. Les cellules de la grille-entretoise sont ouvertes à leurs deux extrémités dans la direction axiale des cellules, de manière que chacune des cellules puisse recevoir un crayon dans une disposition centrale, dans laquelle l'axe du crayon est placé suivant l'axe de la cellule. Les crayons combustibles présentent un diamètre sensiblement inférieur au côté des cellules carrées, de sorte qu'il subsiste un espace libre autour du crayon, entre la surface externe cylindrique du crayon et la paroi périphérique de la cellule dans laquelle est engagé axialement le crayon. La grille-entretoise comporte, dans chacune des cellules destinées à recevoir un crayon combustible, des moyens d'appui et de maintien destinés à venir en contact avec la surface externe du crayon combustible, pour assurer le maintien du crayon dans des directions transversales perpendiculaires à l'axe du crayon et de la cellule, tout en autorisant des déplacements du crayon dans la direction axiale, par exemple sous l'effet de la dilatation à l'intérieur du coeur du réacteur nucléaire.

Les moyens d'appui et de maintien des crayons de combustible dans les cellules d'une grille-entretoise comportent généralement des bossettes en saillie vers l'intérieur de la cellule par rapport à la paroi périphérique, qui sont réalisées par découpage et repoussage de la paroi et des ressorts élastiques également en saillie à l'intérieur de la cellule par rapport à la paroi qui sont réalisés par découpage et repoussage d'une partie de la paroi, ou qui sont rapportés et fixés sur la paroi périphérique.

Généralement, on prévoit deux bossettes sur chacune de deux faces adjacentes de la paroi périphérique de forme parallélépipédique et deux ressorts sur les faces opposées aux faces comportant les bossettes. Le crayon combustible est maintenu à l'intérieur de la cellule en six points, au niveau des quatre bossettes et des deux ressorts, les ressorts et les bossettes étant réalisés de manière à venir en contact avec le crayon combustible suivant une zone de faible surface assimilée à un point de contact. Une telle grille est décrite dans US-A-3 933 584.

En plus, du maintien transversal des crayons du faisceau de l'assemblage de combustible, les grilles-entretoises assurent le mélange et le brassage de l'eau de refroidissement du réacteur qui circule au contact des crayons de combustible dans la direction longitudinale axiale.

Les grilles-entretoises des assemblages de combustible sont constituées de plaquettes métalliques de forme rectangulaire découpées à mi-largeur pour être engagées l'une sur l'autre et assemblées par soudage, sous la forme du réseau à mailles carrées.

Pour assurer le mélange et le brassage de l'eau de refroidissement à la sortie de la grille-entretoise, les plaquettes des grilles-entretoises sont découpées suivant leur bord destiné à venir en partie supérieure de la grille-entretoise, pour constituer des ailettes de brassage qui sont .repliées vers l'intérieur des cellules, alternativement dans un sens et dans l'autre, de manière à assurer le guidage du fluide sortant d'une cellule vers une cellule voisine et ainsi le brassage des différents courants de fluide au contact des crayons combustibles. Un tel exemple se trouve dans FR-2 666 678.

Les plaquettes utilisées pour réaliser une grille-entretoise doivent donc être découpées suivant un dessin particulier et embouties ou repoussées pour constituer les bossettes et ressorts. Dans le cas de ressorts rapportés sur les parois des cellules, il faut également prévoir des découpes pour la fixation des ressorts puis le montage et le soudage des ressorts qui peuvent être réalisés en un matériau métallique différent de celui des plaquettes.

Par exemple, les plaquettes peuvent être en alliage de zirconium et les ressorts en alliage de nickel.

La réalisation des grilles-entretoises est donc complexe, du fait qu'elle nécessite de nombreuses opérations de découpage, d'emboutissage, de montage et de soudage.

En outre, le maintien des crayons de combustible qui est assuré en six points à l'intérieur de chacune des cellules peut entraîner une usure locale de la gaine des crayons en contact avec les bossettes ou les ressorts, par frottement, du fait que l'eau de refroidissement du réacteur met en vibration les crayons à l'intérieur des grilles-entretoises. Ce phénomène qui est généralement désigné comme "usure par fretting" peut entraîner, au cours de longues périodes d'utilisation du réacteur nucléaire, un perçage de la gaine des crayons dans les zones de contact.

Enfin, la capacité de mélange des ailettes découpées sur les bords supérieurs des grilles-entretoises est limitée, de sorte qu'on n'obtient pas une parfaite homogénéisation de la température de l'eau de refroidissement en circulation dans l'assemblage de combustible. Il peut en résulter des points chauds au contact des crayons dans certaines zones au niveau desquelles on observe le phénomène d'apparition de la crise d'ébullition, c'est-à-dire la formation locale de bulles de vapeur dans l'eau de refroidissement.

Le but de l'invention est donc de proposer une grille-entretoise d'un assemblage de combustible pour un réacteur nucléaire refroidi par de l'eau légère, pour assurer le maintien transversal d'un faisceau de crayons combustibles dans des dispositions parallèles entre elles, comportant un ensemble de cellules juxtaposées et placées suivant un réseau régulier, délimitées chacune et séparées de cellules voisines, par au moins une paroi périphérique qui est ouverte à deux extrémités opposées, suivant la direction d'un axe de la cellule, de manière à recevoir un crayon combustible de forme générale cylindrique traversant la cellule suivant son axe parallèle à la paroi périphérique et des moyens d'appui et de maintien du crayon dans une disposition centrale dans laquelle l'axe du crayon est disposé suivant l'axe de la cellule, un espace libre étant ménagé entre la surface externe cylindrique du crayon combustible et la paroi périphérique de la cellule, dans laquelle les moyens d'appui et de maintien du crayon combustible dans chacune des cellules recevant un crayon combustible comportent au moins un élément ayant une disposition en hélice autour de l'axe de la cellule comprenant une paroi ayant la forme d'une lame hélicoïdale s'étendant transversalement dans l'espace libre entre la surface externe du crayon combustible et la paroi périphérique de la cellule, de manière à assurer un appui du crayon combustible suivant une partie substantielle de la hauteur de la cellule, dans la direction de son axe, cette grille-entretoise étant d'une réalisation simplifiée, d'une grande efficacité quant au maintien des crayons, tout en limitant le phénomène d'usure par fretting et présentant une très bonne capacité de mélange de l'eau de refroidissement à l'intérieur et à la sortie de la gritte-entretoise.

Dans ce but, l'au moins un élément ayant une disposition en hélice des moyens d'appui et de maintien d'un crayon combustible est constitué par une partie de la paroi périphérique de la cellule découpée dans la paroi périphérique suivant une direction inclinée par rapport à l'axe de la cellule et repliée, de manière à constituer une première partie en forme de lame de direction transversale par rapport à la paroi périphérique et une seconde partie sensiblement parallèle à la paroi de la cellule constituant une surface d'appui pour la surface externe du crayon de combustible, reliée à la paroi périphérique de la cellule par la première partie de direction transversale constituant une lame élastique de maintien du crayon et de guidage d'un fluide de refroidissement dans une disposition hélicoïdale autour de l'axe de la cellule.

Afin de bien faire comprendre l'invention, on va maintenant décrire, à titre d'exemple, en se référant aux figures jointes en annexe, un assemblage de combustible d'un réacteur nucléaire refroidi par de l'eau sous pression, et une grille-entretoise suivant l'invention comparativement à une grille-entretoise suivant l'art antérieur.
La figure 1 est une vue en élévation et en coupe d'un assemblage de combustible d'un réacteur nucléaire refroidi par de l'eau sous pression.
La figure 2 est une vue en plan d'une grille-entretoise de l'assemblage de combustible réalisée suivant l'art antérieur.
La figure 3A est une vue en perspective d'une cellule d'une grille-entretoise suivant l'invention.
La figure 3B est une vue en coupe axiale de la cellule représentée sur la figure 3A dans laquelle est introduit un crayon de combustible.
Les figures 4A et 4B analogues aux figures 3A et 3B, respectivement, sont relatives à une variante de réalisation de la grille-entretoise.
La figure 5 est une vue en plan d'une partie d'une grille-entretoise suivant l'invention.

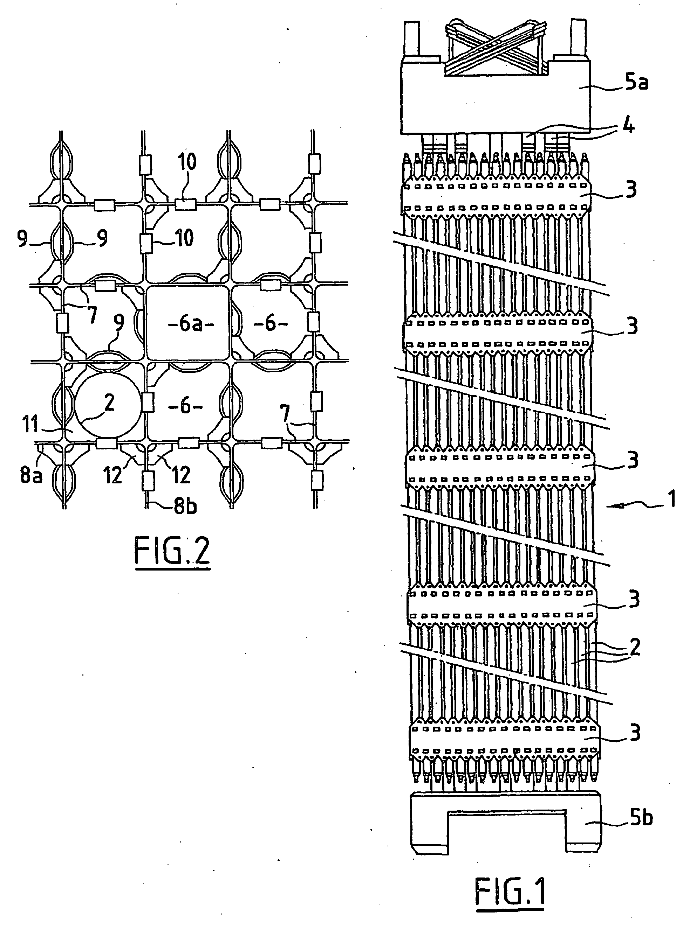

Sur la figure 1, on a représenté un assemblage de combustible pour un réacteur nucléaire refroidi par de l'eau sous pression désigné de manière générale par le repère 1.

L'assemblage de combustible 1 est constitué d'un faisceau de crayons combustibles 2 de forme sensiblement cylindrique et constitués par une gaine métallique dans laquelle sont empilées des pastilles de combustible et qui est fermée à ses extrémités par des bouchons.

Les crayons combustibles 2 du faisceau de l'assemblage de combustible sont maintenus par une ossature qui comporte une pluralité de grilles-entretoises 3 réparties suivant la direction longitudinale de l'assemblage de combustible, dans la direction axiale des crayons 2, des tubes-guides 4 qui sont placés à l'intérieur du faisceau de crayons de combustible 2 et assemblés avec les grilles 3 ainsi qu'un embout supérieur 5a et un embout inférieur 5b qui sont fixés rigidement aux extrémités des tubes-guides 4 dont la longueur est supérieure à la longueur des crayons combustibles 2 du faisceau.

Les grilles-entretoises qui assurent le maintien transversal des crayons combustibles 2 du faisceau de l'assemblage de combustible comportent, comme il est visible sur la figure 2, des cellules à section carrée 6 disposées suivant un réseau régulier à mailles carrées. Chaque cellule 6 comporte une paroi périphérique 7 de forme parallélépipédique à base carrée ouverte à ses deux extrémités dans la direction de l'axe 6' de la cellule, perpendiculaire au plan de la figure 2 et passant par le centre de la section carrée de la cellule.

Les parois périphériques 7 des cellules 6 de la grille-entretoise 3 sont constituées par des plaquettes entrecroisées à angle droit constituant deux familles de plaquettes 8a et 8b parallèles entre elles.

Les plaquettes 8a et 8b des deux familles de plaquettes sont découpées dans des feuillards métalliques, par exemple en alliage de zirconium et comportent, à des distances correspondant aux côtés des cellules 6, des fentes à mi-largeur qui permettent leur assemblage par engagement mutuel dans des dispositions à 90°, comme représenté sur la figure 2.

Les plaquettes assemblées sont ensuite soudées suivant les lignes d'assemblage constituant les arêtes des cellules 6 de la grille-entretoise. Préalablement à leur assemblage, les plaquettes 8a et 8b sont découpées et embouties pour constituer des bossettes 9 en saillie à l'intérieur des cellules 6. Les plaquettes 8a et 8b comportent également des ouvertures qui sont découpées à intervalle régulier, de manière à assurer le montage et la fixation de ressorts 10 également en saillie vers l'intérieur des cellules 6. Chacune des cellules comporte deux parois adjacentes à 90°, sur chacune desquelles sont réalisées, par découpage et repoussage du métal des plaquettes, deux bossettes 9 espacées dans la direction axiale de la cellule. Les deux autres parois de la cellule qui sont adjacentes et à 90° reçoivent des ressorts 10. De cette manière, six points de contact sont prévus à l'intérieur de chacune des cellules 6 pour un crayon de combustible 2 introduit suivant la direction de l'axe 6' dans une position centrée à l'intérieur de la cellule 6. Le diamètre extérieur du crayon combustible 2 est sensiblement inférieur à la longueur du côté d'une cellule 6, de telle sorte qu'un espace libre 11 est ménagé autour de la surface externe cylindrique du crayon 2, à l'intérieur de la paroi périphérique 7 de la cellule dans laquelle le crayon est maintenu en position centrée par les bossettes 9 et les ressorts 10.

La vue en plan de la figure 2 est une vue de dessus d'une grille-entretoise et on voit que les plaquettes 8a et 8b constituant la grille-entretoise sont découpées suivant leur bord supérieur pour constituer des ailettes de brassage 12 d'eau de refroidissement circulant à l'intérieur des cellules au contact de la surface externe des crayons combustibles 2. Les ailettes de brassage 12 sont repliées vers l'intérieur des cellules, de manière à diriger l'eau de refroidissement à la sortie de chacune des cellules vers une cellule voisine. On obtint ainsi un effet de brassage de l'eau circulant au contact de chacun des crayons de combustible dans la direction axiale.

Les plaquettes 8a et 8b de la grille-entretoise 3 doivent être embouties pour réaliser des bossettes en saillie sur leurs deux faces, chacune des portions de plaquette assurant, au niveau d'une cellule, la séparation de deux cellules voisines dans lesquelles les bossettes sont réalisées-sur la même plaquette.

La réalisation d'une grille-entretoise est donc complexe et nécessite de nombreuses opérations de découpage, de mise en forme et d'assemblage. De plus, le maintien du crayon de combustible 2 à l'intérieur d'une cellule 6 de la grille-entretoise n'est assuré qu'au niveau de six zones de faible surface constituant des points de contact.

En outre, à l'intérieur du réseau des cellules, il est nécessaire de réaliser des cellules 6a de type particulier assurant le passage, et éventuellement la fixation, des tubes-guides 4 de l'assemblage de combustible.

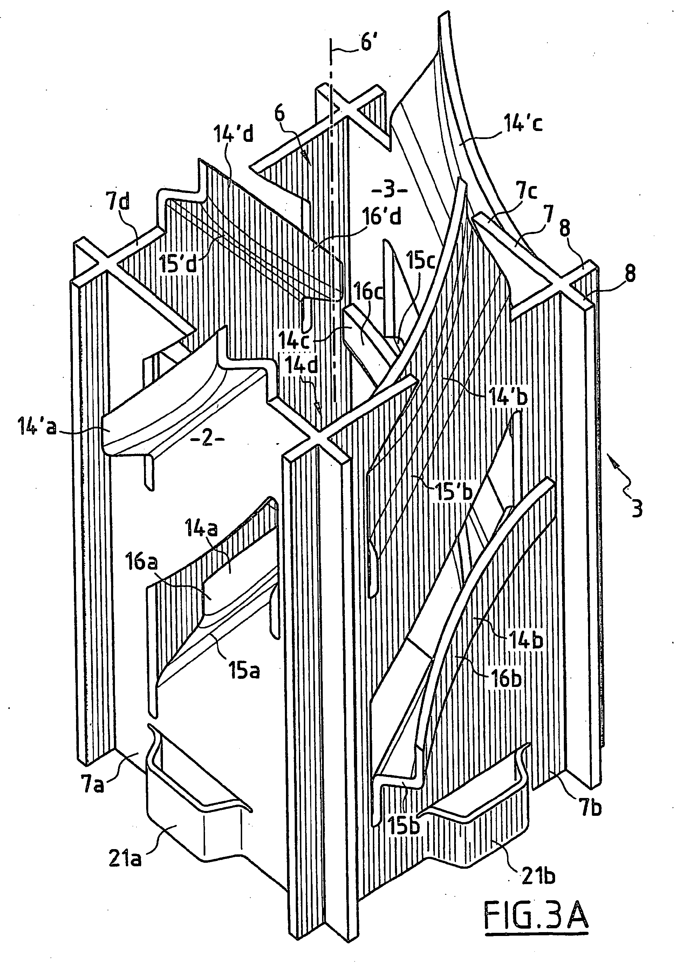

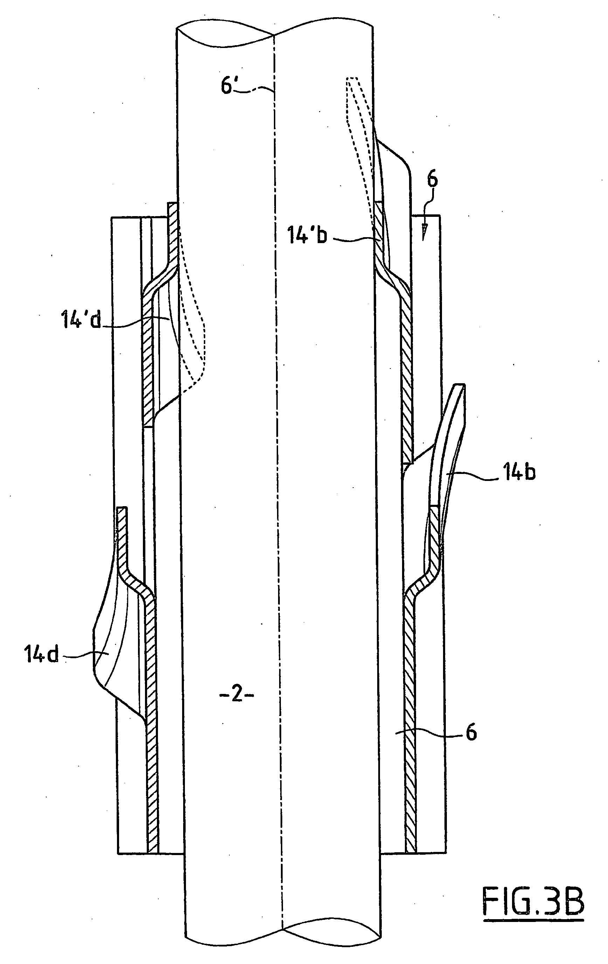

Sur les figures 3A et 3B, on a représenté une cellule d'une grille-entretoise suivant l'invention qui peut être utilisée en remplacement d'une grille-entretoise selon l'art antérieur telle que représentée sur la figure 2.

De manière générale, la grille-entretoise 3 suivant l'invention est réalisée d'une manière analogue à la grille-entretoise suivant l'art antérieur, à partir de plaquettes métalliques 8 qui sont assemblées et fixées par soudage à angles droits pour constituer un réseau de cellules 6 à section carrée délimitées chacune par une paroi périphérique 7 de forme parallélépipédique à base carrée constituée par des portions de plaquettes 8 assemblées entre elles à angles droits.

Sur chacune des portions de plaquette constituant l'une des faces de la paroi périphérique 7 d'une cellule 6, sont réalisés, par découpage et pliage, deux éléments d'appui et de maintien d'un crayon de combustible disposé de manière générale, suivant une hélice ayant pour axe l'axe 6' de la cellule 6.

On désigne par 7a, 7b, 7c et 7d les quatre faces de la paroi périphérique 7 de la cellule 6 ayant la forme d'un parallélépipède à section carrée.

Dans le métal de la face 7a sont réalisés, par découpage et pliage, deux éléments 14a et 14'a disposés, pour le premier (14a), dans la partie d'extrémité inférieure et, pour le second (14'a), dans la partie d'extrémité supérieure de la face 7a de la paroi 7.

De même, sur les faces successives 7a, 7b, 7c et 7d, sont réalisés, par découpage et pliage, des éléments d'appui et de maintien respectifs 14b, 14'b, 14c, 14'c et 14d, 14'd, respectivement.

Les éléments d'appui et de maintien 14a, 14b, 14c et 14d sont disposés dans la partie inférieure et les éléments 14'a, 14'b, 14'c et 14'd sont réalisés par découpage et pliage dans la partie supérieure de la paroi périphérique 7 de la cellule 6.

La vue de la figure 3B représente une coupe axiale à travers les faces opposées 7b et 7d.

Comme il est visible sur les figures 3A et 3B, les éléments d'appui et de maintien d'un crayon 2 dans la cellule 6 sont réalisés par découpage d'une face de la paroi 7 dans une direction inclinée par rapport à l'axe 6' de la cellule 6, de manière que les découpes soient toutes dirigées vers le haut, lorsqu'on tourne autour de l'axe 6' de la cellule 6 dans le sens allant de la droite vers la gauche sur la figure 3A, ce sens correspondant au sens d'enroulement des hélices dirigées vers le haut constituées par les éléments d'appui et de maintien successifs de la cellule 6.

Les découpes successives sur les faces de la paroi périphérique 7 de la cellule 6 ont des formes globalement rectangulaires, les petits côtés des découpes rectangulaires étant dirigés suivant des directions parallèles à l'axe 6' de la cellule et la découpe comportant un seul grand côté incliné dirigé suivant la direction de l'hélice d'enroulement des éléments d'appui et de maintien de la cellule, la découpe étant liée à la paroi par son second grand côté suivant lequel on réalise le pliage de la paroi. Ce grand côté et la découpe font un angle de l'ordre de 30° avec la direction de l'axe 6' de la cellule 6.

Les éléments successifs d'appui et de maintien 14a, 14'a, ... 14d, 14'd sont réalisés par pliage des découpes correspondantes suivant des directions sensiblement parallèles au grand côté de liaison de la découpe avec la paroi.

On réalise par pliage des découpes, les éléments successifs d'appui et de maintien 14a, 14'a, ... 14d, 14'd, en dehors du plan de la face de la paroi 7 dans laquelle est réalisée la découpe.

On réalise un premier pliage (par exemple à 45°) de la découpe par rapport au plan de la face de la paroi et un second pliage vers le haut de la cellule, suivant des lignes de pliage sensiblement parallèles au grand côté de la découpe et disposées sensiblement suivant des portions d'hélice enroulées dans le sens voulu autour de l'axe 6' de la cellule. On obtient ainsi une paroi,(par exemple 15a ou 15b) de l'élément d'appui et de maintien correspondant 14a ou 14b dirigée transversalement par rapport à l'axe 6' et à la face de la paroi 7 et une seconde paroi (16a ou 16b) sensiblement parallèle à la face de la paroi 7 de la cellule.

Le pliage des découpes est réalisé successivement, vers l'intérieur et vers l'extérieur de la cellule 6, pour les découpes successives dans la direction de l'axe 6' et dans la direction d'enroulement de l'hélice suivant laquelle sont disposés les éléments d'appui et de maintien.

C'est ainsi que la première paroi 15a du premier élément d'appui et de maintien 14a est pliée vers l'intérieur de la cellule 6 et la seconde paroi 16a du premier élément 14a repliée parallèlement à la face 7a de la paroi à l'intérieur de la cellule 6. Au contraire, la première paroi 15b du second élément d'appui et de maintien 14b est repliée vers l'extérieur de la cellule 6, dans une cellule voisine de la cellule 6, et la seconde paroi 14b du second élément d'appui et de maintien 14b est repliée dans une disposition sensiblement parallèle à la face 7b de la paroi 7, dans la cellule voisine de la cellule 6.

L'élément d'appui et de maintien 14'a, disposé dans la partie supérieure de la première face 7a de la paroi 7 de la cellule 6 dans l'alignement axial de l'élément d'appui et de maintien 14a disposé dans la partie inférieure de la face 7a de la paroi 7, est replié à l'inverse de l'élément d'appui et de maintien 14a, c'est-à-dire vers l'extérieur.

Chacun des éléments d'appui et de maintien successifs, dans la direction axiale ou dans la direction de l'hélice d'enroulement des éléments d'appui et de maintien, est donc replié dans un sens différent du précédent.

De ce fait, l'élément 14c est replié vers l'intérieur et l'élément 14d vers l'extérieur, l'élément 14'b, situé dans la partie supérieure de la cellule 6, est replié vers l'intérieur alors que les éléments successifs 14'c et 14'd sont repliés, respectivement vers l'extérieur et vers l'intérieur de la cellule 6.

Les secondes parois telles que 16a, 16b ou 16d visibles sur la figure 3, des éléments d'appui et de maintien respectifs 14a, 14b et 14'd sont pliées de manière à présenter la forme d'une portion d'anneau ayant pour diamètre sensiblement le diamètre d'un crayon 2 de l'assemblage de combustible. Ces secondes parois telles que 16a, 16b ou 16'd sont destinées à venir en contact avec la surface externe d'un crayon 2 introduit dans la cellule 6 ou dans une cellule voisine.

Les éléments d'appui et de maintien découpés dans la partie supérieure des faces 7a, 7b, 7c et 7d de la paroi périphérique 7 de la cellule 6 sont réalisés sous forme d'ailettes en saillie vers le haut par rapport au bord supérieur de la paroi périphérique 7 de la cellule 6. Pour cela, on découpe des parties des plaquettes en saillie par rapport à l'un des bords des plaquettes qui sont repliées d'un côté de la plaquette pour constituer les deux parois des éléments d'appui et de maintien qui constituent également une ailette de guidage et de brassage d'eau de refroidissement de l'assemblage de combustible.

Les ailettes telles que 14'a ou 14'c qui sont repliées vers l'extérieur de la cellule 6 comportent une partie d'extrémité supérieure (dans le sens d'enroulement des éléments de maintien en hélice) qui est dirigée vers une cellule voisine de la cellule 6.

Les premières parois telles que 15a ou 15b des éléments d'appui et de maintien qui sont pliées dans une direction perpendiculaire ou inclinée par rapport à la face de la paroi dans laquelle est réalisée la découpe constituent des lames de direction transversale par rapport aux parois de la cellule disposées suivant des portions d'hélice enroulées dans le sens d'enroulement des éléments de maintien successifs découpés dans les parois de la cellule 6.

Les premières parois ou lames 15a, 15'b, 15c et 15'd dirigées vers l'intérieur de la cellule constituent des lames de direction transversale entre le plan de la face de la paroi correspondante et une surface d'appui du crayon de combustible qui peut être introduit dans la cellule 6, qui est constituée par la surface interne courbe de la seconde paroi 16a, 16'b, 16c ou 16'd de l'élément d'appui et de maintien correspondant.

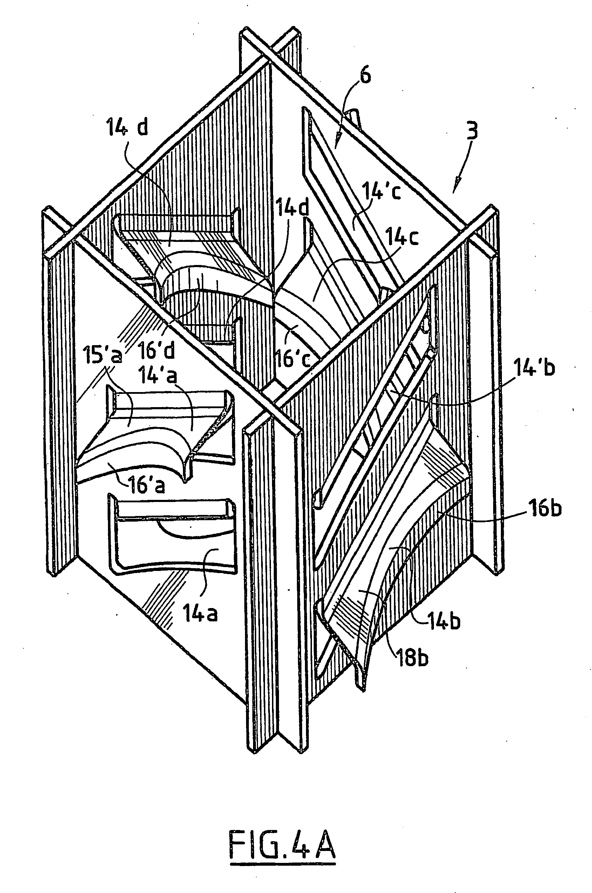

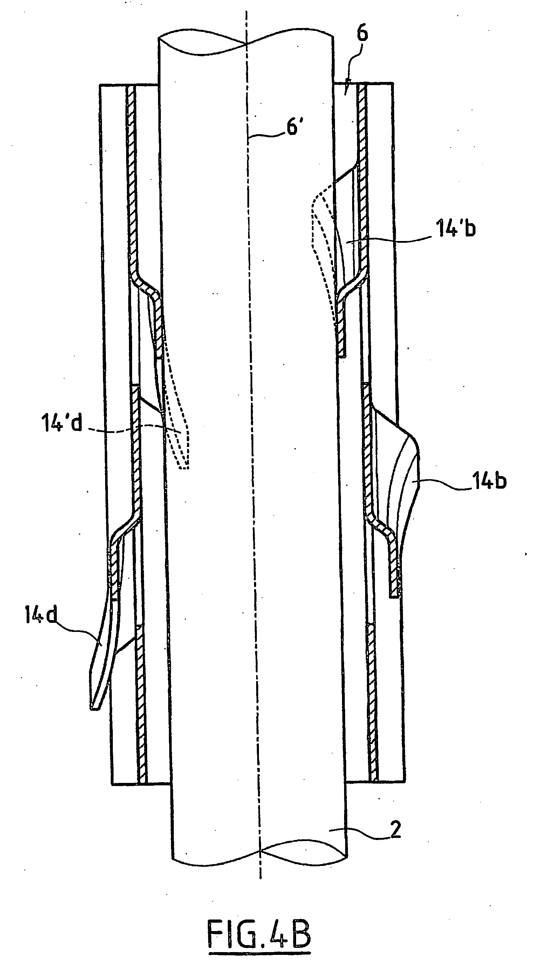

Lorsqu'on introduit un crayon de combustible 2 dans la cellule 6 suivant l'axe 6' de la cellule 6, comme représenté sur la figure 4, la surface externe du crayon 2 vient en contact avec les secondes surfaces 16a, 16'b, 16c et 16'd des quatre éléments d'appui et de maintien repliés vers l'intérieur de la cellule 6. Les premières parois correspondantes 15a, 15'b, 15c et 15'd de direction transversale ayant la forme d'une portion d'hélice qui s'étendent entre la paroi périphérique 7 de la cellule 6 et la seconde paroi en appui sur la surface externe du crayon présentent une élasticité leur permettant d'assurer un maintien élastique du crayon 2, les éléments d'appui et de maintien 14a, 14'b, 14c et 14'd dirigés vers l'intérieur de la cellule 6 étant repliés de manière que les surfaces internes d'appui des secondes parois 16a, 16'b, 16c et 16'd soient situées sur une surface cylindrique ayant pour axe l'axe 6' de la cellule et présentant un diamètre légèrement inférieur au diamètre du crayon. Lorsqu'on introduit le crayon 2 suivant l'axe 6' de la cellule 6 à l'intérieur de la cellule 6, le crayon 2 écarte légèrement les surfaces d'appui, en jouant sur l'élasticité des lames transversales en forme de portions d'hélice.

Les quatre surfaces d'appui des secondes parois 16a, 16'b, 16c et 16'd viennent en contact avec le crayon 2, suivant deux zones dont la hauteur totale, suivant la direction axiale 6' de la cellule 6, est sensiblement égale ou légèrement inférieure à la hauteur totale de la cellule 6 dans la direction de l'axe 6'.

Le crayon est ainsi maintenu en contact avec des surfaces d'appui sur une hauteur totale sensiblement égale à la hauteur de la cellule 6, c'est-à-dire à la hauteur de la grille-entretoise. La surface totale des quatre zones d'appui des quatre éléments d'appui et de maintien 14a, 14'b, 14c et 14'd à l'intérieur de la cellule 6 est donc importante et sensiblement plus grande que la surface d'appui totale des quatre bossettes et de deux ressorts d'une cellule d'une grille-entretoise suivant l'art antérieur. On réduit ainsi la pression d'appui sur le crayon 2 et les risques d'usure par fretting, sur l'assemblage en service dans le réacteur nucléaire.

D'autre part, l'eau de refroidissement du réacteur en circulation dans la direction verticale au contact de la surface extérieure du crayon combustible 2 est guidée par les premières parois transversales en forme de lames hélicoïdale des quatre éléments repliés vers l'intérieur de la cellule, de manière à constituer un courant hélicoïdal autour du crayon 2, dans l'espace libre entre la surface externe du crayon et la paroi périphérique 7 de la cellule 6. Les ailettes basse 14a et haute 14'b situées sur deux faces adjacentes d'une cellule assurent un guidage successif du fluide sur un quart de tour chacune, de manière que l'eau de refroidissement décrive une portion d'hélice sur 180° environ, à la traversée de la cellule ; les ailettes 14c et 14'd ont un effet similaire. Il en résulte un guidage du fluide à l'intérieur de la cellule 6 favorisant les échanges thermiques avec la surface externe du crayon 2. De plus, les éléments d'appui et de maintien réalisés dans les parties supérieures de la paroi périphérique 7 de la cellule 6 dirigées soit vers l'intérieur de la cellule 6 soit vers l'extérieur et vers des cellules voisines assurent un très bon brassage et un très bon mélange du courant circulant au contact du crayon à l'intérieur de la cellule 6 et des courants circulant au contact des crayons combustibles situés dans les cellules voisines de la cellule 6.

En outre, la réalisation d'une grille-entretoise suivant l'invention ne nécessite que des opérations simples de découpage et de pliage sur les différentes plaquettes destinées à constituer la grille-entretoise par assemblage à angles droits et soudage, comme dans le cas de la technique antérieure.

En plus des éléments d'appui et de maintien 14a, 14'a, ...14d, 14'd qui constituent des bossettes d'appui élastiques des crayons, des bossettes rigides telles que 21 a et 21 b peuvent être réalisées par découpage et repoussage du métal des parois de la cellule. Deux bossettes telles que 21 a et 21 b réalisées sur deux parois adjacentes de la cellule 6 peuvent être repoussées vers l'extérieur de la cellule 6 et deux bossettes (non représentées) réalisées sur les deux autres parois adjacentes de la cellule 6 peuvent être repoussées vers l'intérieur de la cellule. Chaque cellule comporte alors deux bossettes rigides d'appui du crayon, par exemple en partie basse.

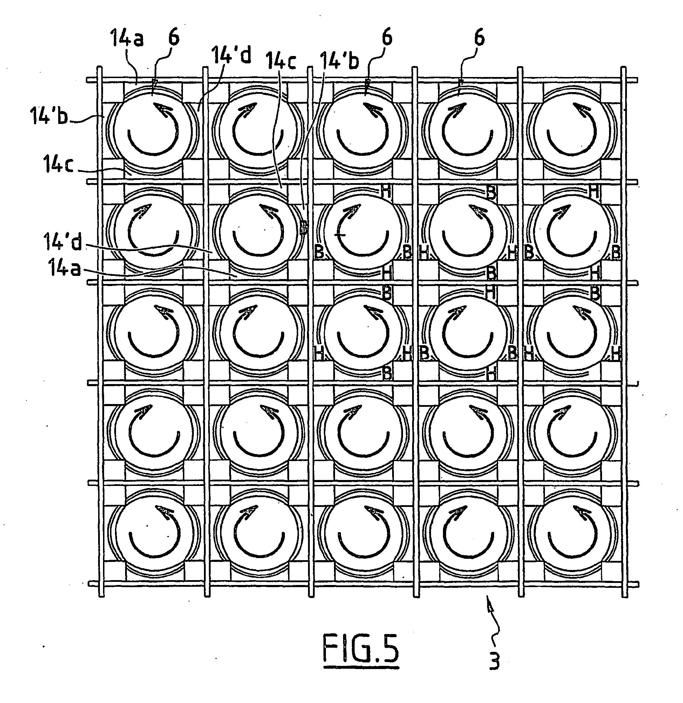

Sur la figure 5, on a représenté en plan une partie de la grille-entretoise 3 selon le premier mode de réalisation, cette partie de la grille-entretoise comportant cinq rangées de cinq cellules 6.

A l'intérieur de deux cellules 6, on a indiqué, par des références analogues à celles utilisées sur la figure 3, les éléments d'appui et de maintien 14a, 14'b, 14c et 14'd repliés vers l'intérieur de la cellule, les éléments 14a et 14c étant réalisés dans une partie inférieure de la paroi périphérique 7 de la cellule et les éléments 14'b et 14'd, dans des parties supérieures de la paroi 7 de la cellule.

Dans l'ensemble de la vue de la figure 5, on a désigné par H les éléments d'appui, de maintien et de guidage de fluide en hélice découpés dans une partie supérieure de la paroi d'une cellule et par B les éléments d'appui, de maintien et de guidage découpés dans une partie inférieure de la paroi 7 d'une cellule.

Du fait que, dans chacune des faces de la paroi périphérique 7 d'une cellule, sont découpés un élément d'appui et de maintien dans une partie inférieure de la face de la paroi et un élément d'appui, de maintien et de guidage dans une partie supérieure de la face de la paroi périphérique de la cellule, ces éléments étant repliés de part et d'autre de la paroi, c'est-à-dire vers l'intérieur et vers l'extérieur de la cellule 6 considérée, chaque face d'une paroi périphérique de cellule permet de réaliser un élément d'appui, de maintien et de guidage en partie haute ou basse de la cellule disposé suivant une hélice ayant un sens d'enroulement horaire ou anti-horaire dans la direction de circulation du fluide à travers la grille-entretoise, c'est-à-dire du bas vers le haut et un second élément d'appui, de maintien et de guidage à l'intérieur d'une cellule voisine de la cellule, suivant une hélice ayant un sens d'enroulement opposé au sens d'enroulement de l'hélice de la première cellule.

Sur la figure 5, on a représenté les sens de guidage de la circulation du fluide par des éléments d'appui, de maintien et de guidage en forme d'hélice dans les vingt-cinq cellules 6 représentées dans des positions adjacentes.

On voit que le sens de rotation du fluide dans chacune des cellules 6 est alterné d'une cellule à une cellule voisine quelconque. Cette caractéristique de circulation du fluide favorise le mélange et évite l'application d'un couple résultant à la grille-entretoise, du fait de la circulation du fluide.

Pour optimiser les caractéristiques de maintien du crayon de combustible et de mélange de l'eau de refroidissement, on peut régler les paramètres suivants :
- angle d'inclinaison de l'hélice par rapport à la direction verticale de l'axe des cellules,
- altitude relative des hélices hautes et basses dans chacune des faces de la paroi périphérique des cellules,
- position des éléments de maintien et de guidage en hélice par rapport au bas des plaquettes constituant la grille-entretoise,
- hauteur au-dessus du bord supérieur de la grille-entretoise, de la partie en saillie des éléments de maintien et de guidage disposés dans la partie supérieure des cellules de la grille-entretoise,
- largeur de la lame de direction transversale constituant la zone flexible de l'élément de maintien et de guidage de forme hélicoïdale, et
- longueur de la zone de contact entre l'élément de maintien et de guidage en hélice et le crayon 2 disposé à l'intérieur d'une cellule.

Dans chacune des cellules de la grille-entretoise destinée à recevoir un crayon combustible, on peut réaliser sur au moins une paroi de la cellule, par emboutissage de la plaquette constituant la paroi, au moins une forme emboutie en saillie dans la cellule, telle qu'une bossette. On limite ainsi le débattement du crayon dans la cellule et on renforce son encastrement.

Dans le cas de la variante de réalisation représentée sur les figures 4A et 4B, (les éléments correspondant à ceux représentés sur les figures 3A et 3B sont affectés des mêmes repères), les ailettes telles que 14a et 14'a, 14b et 14'b, 14c et 14'c, 14d et 14'd situées dans des parties respectives basse et haute des parois d'une cellule 6 de la grille-entretoise 3 sont repliées alternativement vers l'intérieur et vers l'extérieur de la cellule de la même manière que les ailettes représentées sur les figures 3A et 3B.

A la différence des ailettes de la cellule représentée sur les figures 3A et 3B, cependant, les premières parois telles que 15'a, 15c, 15'b ou 15'd des ailettes, en forme de lames transversales, sont repliées vers le bas (par exemple à 45°) et non vers le haut. De même, les secondes parois telles que 16'a, 16b, 16c ou 16d assurant l'appui du crayon sur une surface d'appui cylindrique, sont repliées vers le bas.

Lorsque de l'eau de refroidissement est en circulation dans la cellule 6, il se produit un plaquage des surfaces d'appui des ailettes contre le crayon sous l'effet des forces hydrauliques. Les échanges hydrauliques à l'intérieur de la cellule sont également favorisés.

Les ailettes hautes et basses peuvent être découpées dans les parois de la cellule à une certaine distance des bords supérieurs de ces parois.

L'invention ne se limite pas strictement au mode de réalisation qui a été décrit.

C'est ainsi que les éléments de maintien et de guidage de forme hélicoïdale peuvent présenter un angle d'inclinaison par rapport à l'axe de la cellule ou du crayon de combustible différent de 30° et que l'élément de maintien et de guidage de fluide de chacune des cellules de la grille-entretoise peut être réalisé d'une manière différente de celles qui ont été décrites.

L'invention s'applique, de manière générale, à toute grille-entretoise pour un assemblage de combustible d'un réacteur nucléaire refroidi par de l'eau légère assurant le maintien transversal de crayons constituant un faisceau dans lequel les crayons sont parallèles entre eux.

## Revendications

1. Grille-entretoise d'un assemblage de combustible pour un réacteur nucléaire refroidi par de l'eau légère, pour assurer le maintien transversal d'un faisceau de crayons combustibles (2) dans des dispositions parallèles entre elles, comportant un ensemble de cellules (6) juxtaposées et placées suivant un réseau régulier, délimitées chacune et séparées de cellules voisines, par au moins une paroi périphérique (7) qui est ouverte à deux extrémités opposées, suivant la direction d'un axe (6') de la cellule (6), de manière à recevoir un crayon combustible (2) de forme générale cylindrique traversant la cellule (6) suivant son axe (6') parallèle à la paroi périphérique (7) et des moyens d'appui et de maintien du crayon dans une disposition centrale dans laquelle l'axe du crayon est disposé suivant l'axe (6') de la cellule (6), un espace libre étant ménagé entre la surface externe cylindrique du crayon combustible (2) et la paroi périphérique (7) de la cellule (6), dans laquelle les moyens d'appui et de maintien du crayon combustible (2) dans chacune des cellules (6) recevant un crayon combustible (2) comportent au moins un élément (14a, 14b, 14c, 14d ; 14'a, 14'b, 14'c, 14'd ; 18a, 18b) ayant une disposition en hélice autour de l'axe (6') de la cellule (6) comprenant une paroi (15a, 15b, 15c, 15d ; 15'a, 15'b, 15'c, 15'd ; 18a, 18b) ayant la forme d'une lame hélicoïdale s'étendant transversalement dans l'espace libre entre la surface externe du crayon combustible (2) et la paroi périphérique (7) de la cellule (6), de manière à assurer un appui du crayon combustible (2) suivant une partie substantielle de la hauteur de la cellule (6), dans la direction de son axe (6'), **caractérisée par le fait que** l'au moins un élément ayant une disposition en hélice des moyens d'appui et de maintien d'un crayon combustible (2) est constitué par une partie de la paroi périphérique de la cellule (6) découpée dans la paroi périphérique (7) suivant une direction inclinée par rapport à l'axe (6') de la cellule (6) et repliée, de manière à constituer une première partie (15a, 15b) en forme de lame de direction transversale par rapport à la paroi périphérique (7) et une seconde partie (16a, 16b) sensiblement parallèle à la paroi (7) de la cellule (6) constituant une surface d'appui pour la surface externe du crayon de combustible (2), reliée à la paroi périphérique (7) de la cellule (6) par la première partie de direction transversale (15a, 15b) constituant une lame élastique de maintien du crayon et de guidage d'un fluide de refroidissement dans une disposition hélicoïdale autour de l'axe (6') de la cellule (6).

2. Grille-entretoise suivant la revendication 1, comportant des cellules ayant la forme de parallélépipèdes à base carrée ayant quatre faces à 90°, **caractérisée par le fait qu'**elle comporte, pour chacune des cellules, quatre éléments (14a, 14'b, 14c, 14d) réalisés par découpage et pliage d'une partie inclinée de la paroi périphérique (7) de chacune des cellules (6) de la grille-entretoise, un premier élément (14a) ayant une disposition en hélice étant réalisé dans une première partie d'extrémité de la paroi périphérique (7) dans la direction axiale (6') de la cellule (6) par découpage et par pliage d'une portion d'une première face (7a) de la paroi périphérique (7), un second élément (14'b) ayant une disposition en hélice réalisé par découpage et par pliage d'une portion d'une seconde face (7b) de la paroi périphérique (7) adjacente à la première face (7a) dans une seconde partie d'extrémité dans la direction de l'axe (6') de la cellule, un troisième élément (14c) ayant une disposition en hélice réalisé par découpage et par pliage d'une portion d'une troisième face (7c) adjacente à la seconde face (7b), dans la première partie d'extrémité dans la direction de l'axe (6') de la cellule (6) et un quatrième élément (14'd) ayant une disposition en hélice réalisée par découpage et par pliage d'une portion d'une quatrième face (7d) de la paroi périphérique (7) de la cellule (6) adjacente à la troisième et à la première faces (7c, 7a), dans la seconde partie d'extrémité de la paroi périphérique (7) dans la direction de l'axe (6') de la cellule (6).

3. Grille-entretoise suivant l'une quelconque des revendications 1 et 2, **caractérisée par le fait que** des éléments ayant une disposition en hélice (14'a, 14'c) et disposés dans la seconde partie d'extrémité de la paroi périphérique (7) dans la direction de l'axe (6') de la cellule (6) sont en saillie par rapport à un bord d'extrémité de la paroi périphérique (7) à la seconde extrémité de la paroi périphérique et repliés vers des cellules voisines de la cellule (6) dans la paroi périphérique (7) de laquelle ils sont découpés.

4. Grille-entretoise suivant l'une quelconque des revendications 1 à 3, **caractérisée par le fait que** les éléments ayant une disposition en hélice découpés dans la paroi périphérique (7) de la cellule (6) ont une inclinaison par rapport à l'axe (6') de la cellule (6) d'à peu près 30°.

5. Grille-entretoise suivant l'une quelconque des revendications 1 à 4, **caractérisée par le fait que** des éléments ayant une disposition en hélice (14a, 14'a, 14b, 14'b, 14c, 14'c, 14d, 14'd) découpés dans la paroi périphérique (7) de la cellule (6) sont repliés, dans la direction axiale (6') et dans une direction d'enroulement de l'hélice suivant laquelle ils sont disposés, alternativement vers l'intérieur de la cellule (6) et vers l'extérieur de la cellule (6) dans une cellule voisine de la cellule (6).

6. Grille-entretoise suivant la revendication 5, **caractérisée par le fait que** les éléments ayant une disposition en hélice sont découpés et repliés dans la cellule (6) et dans des cellules adjacentes, de telle manière que le sens d'enroulement des éléments en hélice soit inversé entre la cellule (6) et une cellule adjacente quelconque.

7. Grille-entretoise suivant l'une quelconque des revendications 1 à 6, **caractérisée par le fait qu'**elle comporte, en plus des éléments (14a, 14'a, 14b, 14'b, 14c, 14'c, 14d, 14'd) ayant une disposition en hélice et constituant des bossettes d'appui élastiques des crayons combustibles (2), des bossettes rigides (21 a, 21 b) réalisées par découpage et repoussage du métal de parois de cellule (6).

## Claims

1. Support grid of a fuel assembly for a nuclear reactor cooled by light water for transversely retaining a bundle of fuel rods (2) in dispositions parallel to one another, comprising an assembly of juxtaposed cells (6) arranged in a regular network and each delimited and separated from neighbouring cells by at least one peripheral wall (7) which is open at two opposite ends in the direction of an axis (6') of the cell (6), so as to receive a fuel rod (2) of generally cylindrical shape extending through the cell (6) along its axis (6') parallel to the peripheral wall (7), and means for supporting and retaining the rod in a central disposition in which the axis of the rod is disposed along the axis (6') of the cell (6), a free space being provided between the external cylindrical surface of the fuel rod (2) and the peripheral wall (7) of the cell (6), in which free space the means for supporting and retaining the fuel rod (2) in each of the cells (6) which receive a fuel rod (2) include at least one element (14a, 14b, 14c, 14d; 14'a, 14'b, 14'c, 14'd; 18a, 18b) having a helical disposition around the axis (6') of the cell (6) and comprising a wall portion (15a, 15b, 15c, 15d; 15'a, 15'b, 15'c, 15'd; 18a, 18b) having the form of a helicoidal blade extending transversely in the free space between the external surface of the fuel rod (2) and the peripheral wall (7) of the cell (6), so as to support the fuel rod (2) along a substantial portion of the height of the cell (6) in the direction of its axis (6'), **characterised in that** the at least one helically-disposed element of the means for supporting and retaining a fuel rod (2) is formed by a portion of the peripheral wall of the cell (6) cut in the peripheral wall (7) in an inclined direction with respect to the axis (6') of the cell (6) and folded in such a way as to form a first blade-shaped portion (15a, 15b) disposed in a transverse direction with respect to the peripheral wall (7), and a second portion (16a, 16b) substantially parallel to the wall (7) of the cell (6), which forms a support surface for the external surface of a fuel rod (2) and is joined to the peripheral wall (7) of the cell (6) by the first portion disposed in a transverse direction (15a, 15b), forming a resilient blade for retaining the rod and for guiding a cooling fluid in a helicoidal disposition around the axis (6') of the cell (6).

2. Support grid according to Claim 1, comprising cells having the form of parallelepipeds with square bases having four faces disposed at 90° to one another, **characterised in that** for each of the cells it includes four elements (14a, 14'b, 14c, 14d) formed by cutting and folding an inclined portion of the peripheral wall (7) of each of the cells (6) of the support grid, a first element (14a) which has a helical disposition being formed in a first end portion of the peripheral wall (7) in the axial direction (6') of the cell (6) by cutting and folding a portion of a first face (7a) of the peripheral wall (7), a second element (14'b) having a helical disposition formed by cutting and folding a portion of a second face (7b) of the peripheral wall (7) adjacent to the first face (7a) in a second end portion in the direction of the axis (6') of the cell, a third element (14c) having a helical disposition formed by cutting and folding a portion of a third face (7c) adjacent to the second face (7b) in the first end portion in the direction of the axis (6') of the cell (6) and a fourth element (14'd) having a helical disposition formed by cutting and folding a portion of a fourth face (7d) of the peripheral wall (7) of the cell (6) adjacent to the third and first faces (7c, 7a), in the second end portion of the peripheral wall (7) in the direction of the axis (6') of the cell (6).

3. Support grid according to either of Claims 1 and 2, **characterised in that** helically disposed elements (14'a, 14'c) arranged in the second end portion of the peripheral wall (7) in the direction of the axis (6') of the cell (6) project with respect to an end edge of the peripheral wall (7) at the second end of the peripheral wall and are folded towards neighbouring cells of the cell (6) in the peripheral wall (7) of which they are cut.

4. Support grid according to any one of Claims 1 to 3, **characterised in that** the helically disposed elements cut in the peripheral wall (7) of the cell (6) have an inclination of approximately 30° with respect to the axis (6') of the cell (6).

5. Support grid according to any one of Claims 1 to 4, **characterised in that** helically disposed elements (14a, 14'a, 14b, 14'b, 14c, 14'c, 14d, 14'd) cut in the peripheral wall (7) of the cell (6) are folded, in the axial direction (6') and in a winding direction of the helix along which they are disposed, alternately towards the inside of the cell (6) and towards the outside of the cell (6) into a neighbouring cell of the cell (6).

6. Support grid according to Claim 5, **characterised in that** the helically disposed elements are cut and folded into the cell (6) and into adjacent cells in such a manner that the winding direction of the helical elements is reversed between the cell (6) and any adjacent cell.

7. Support grid according to any one of Claims 1 to 6, **characterised in that,** in addition to the helically disposed elements (14a, 14'a, 14b, 14'b, 14c, 14'c, 14d, 14'd) which form resilient support dimples for the fuel rods (2), it includes rigid dimples (21a, 21b) formed by cutting and pressing the metal of the walls of the cell (6).

## Patentansprüche

1. Abstandhaltergitter eines Brennstabbündels für einen leichtwassergekühlten Kernreaktor, das die Aufrechterhaltung der transversalen Anordnung zueinander paralleler Brennstäbe (2) eines Bündels gewährleistet, mit einer Menge entsprechend einem gleichmäßigen Raster nebeneinanderliegender Zellen (6), jede abgegrenzt und von Nachbarzellen getrennt durch wenigstens eine periphere Wand (7), offen an zwei entgegengesetzte Seiten gemäß der Richtung einer Achse (6') der Zelle (6) zur Aufnahme eines Brennstabs (2) von generell zylindrischer Form, der die Zelle (6) entsprechend ihrer zu der peripheren Wand (7) parallelen Achse (6') durchquert, und Stütz- und Halteeinrichtungen des Brennstabs in einer zentralen Anordnung, bei der die Achse des Brennstabs gemäß der Achse (6') der Zelle (6) angeordnet ist, wobei zwischen der zylindrischen Außenoberfläche des Brennstabs (2) und der peripheren Wand (7) der Zelle (6) ein freier Raum ausgespart ist, in dem die Stütz- und Halteeinrichtungen des Brennstabs (2) in jeder der einen Brennstab (2) aufnehmenden Zellen (6) wenigstens ein Element (14a, 14b, 14c, 14d; 14'a, 14'b, 14'c, 14'd; 18a, 18b) mit einer spiralförmigen Anordnung um die Achse (6') der Zelle (6) herum aufweist, eine Wand (15a, 15b, 15c, 15d; 15'a, 15'b, 15'c, 15'd; 18a, 18b) mit der Form einer spiralförmigen Lamelle umfassend, die sich transversal in den freien Raum zwischen der Außenoberfläche des Brennstabs (2) und der peripheren Wand (7) der Zelle (6) erstreckt, um eine Stützung des Brennstabs (2) entsprechend eines substantiellen Teils der Höhe der Zelle (6) in der Richtung ihrer Achse (6') zu gewährleisten,
**dadurch gekennzeichnet, dass** wenigstens ein spiralförmig angeordnetes Element der Stütz- und Halteeinrichtungen eines Brennstabs (2), gebildet durch einen in der peripheren Wand (7) der Zelle (6) gemäß einer bezüglich der Achse (6') der Zelle (6) geneigten Richtung zugeschnittenen Teil der peripheren Wand und so gebogen, dass es einen lamellenförmigen ersten Teil (15a, 15b) von bezüglich der peripheren Wand (7) transversaler Richtung und einen zu der Wand (7) der Zelle (6) im Wesentlichen parallelen zweiten Teil (16a, 16b) umfasst, der für die Außenoberfläche des Brennstabs (2) eine mit der peripheren Wand (7) der Zelle (6) durch den transversal ausgerichteten ersten Teil (15a, 15b) verbundene Stützfläche bildet, eine den Brennstab haltende und eine Kühlflüssigkeit leitende elastische Lamelle in einer spiralförmigen Anordnung um die Achse (6') der Zelle (6) herum bildet.

2. Abstandhaltergitter nach Anspruch 1, Zellen mit der Form von Parallelepipeden mit quadratischer Basis mit vier Seiten zu 90° umfassend, **dadurch gekennzeichnet, dass** jede der Zellen vier Elemente (14a, 14'b, 14c, 14d) umfasst, realisiert durch Zuschneiden und Zubiegen eines geneigten Teils der peripheren Wand (7) jeder Zelle (6) des Abstandsgitters, nämlich ein erstes Element (14a) mit einer spiralförmigen Anordnung, realisiert in einem ersten Endteil der peripheren Wand (7) in der axialen Richtung (6') der Zelle (6) durch Zuschneiden und Zubiegen eines Teilstücks einer ersten Seite (7a) der peripheren Wand (7), ein zweites Element (14'b) mit einer spiralförmigen Anordnung, realisiert durch Zuschneiden und Zubiegen einer an die erste Seite (7a) angrenzenden zweiten Seite (7b) der peripheren Wand (7) in einem zweiten Endteil in der Richtung der Achse (6') der Zelle, ein drittes Elemente (14c) mit einer spiralförmigen Anordnung, realisiert durch Zuschneiden und Zubiegen eines Teilstücks einer an die zweite Seite (7b) angrenzenden dritten Seite (7c), in dem ersten Enteil in der Richtung der Achse (6') der Zelle (6), und ein viertes Element (14'd) mit einer spiralförmigen Anordnung, realisiert durch Zuschneiden und Zubiegen eines Teilstücks einer an die dritte und die erste Seite (7c, 7a) angrenzenden vierten Seite (7d) der peripheren Wand (7) der Zelle (6), in dem zweiten Enteil der peripheren Wand (7) in der Richtung der Achse (6') der Zelle (6).

3. Abstandhaltergitter nach einem der Ansprüche 1 und 2, **dadurch gekennzeichnet, dass** Elemente mit einer spiralförmigen Anordnung (14'a, 14'c) und angeordnet in dem zweiten Endteil der peripheren Wand (7) in der Richtung der Achse (6') der Zelle (6) vorstehen in Bezug auf einen Endrand der peripheren Wand (7) an dem zweiten Ende der peripheren Wand und in der peripheren Wand (7), in der sie zugeschnitten sind, in Richtung Nachbarzellen der Zelle (6) gebogen sind.

4. Abstandhaltergitter nach einem der Ansprüche 1 bis 3, **dadurch gekennzeichnet, dass** die Elemente mit einer spiralförmigen Anordnung, zugeschnitten in der peripheren Wand (7) der Zelle (6) in Bezug auf die Achse (6') der Zelle (6) eine Neigung von ungefähr 30° haben.

5. Abstandhaltergitter nach einem der Ansprüche 1 bis 4, **dadurch gekennzeichnet, dass** die Elemente mit einer spiralförmigen Anordnung (14a, 14'a, 14b, 14'b, 14c, 14'c, 14d, 14'd), zugeschnitten in der peripheren Wand (7) der Zelle (6), in der axialen Richtung (6') und in einer spiralförmigen Aufwicklungsrichtung, entsprechend der sie angeordnet sind, abwechselnd in Richtung Innenseite der Zelle (6) und in Richtung Außenseite der Zelle (6), in eine Nachbarzelle der Zelle (6) hinein, gebogen sind.

6. Abstandhaltergitter nach Anspruch 5, **dadurch gekennzeichnet, dass** die Elemente mit einer spiralförmigen Anordnung in der Zelle (6) und in Nachbarzellen so zugeschnitten und zugebogen sind, dass die spiralförmige Aufwicklungsrichtung der Elemente zwischen der Zelle (6) und einer beliebigen Nachbarzelle umgekehrt ist.

7. Abstandhaltergitter nach einem der Ansprüche 1 bis 6, **dadurch gekennzeichnet, dass** sie außer den elastische Stützvorsprünge der Brennstäbe (2) bildenden Elementen (14a, 14'a, 14b, 14'b, 14c, 14'c, 14d, 14'd) von spiralförmiger Anordnung starre Vorsprünge (21a, 21 b) umfassen, realisiert durch Zuschneiden und Drücken des Metalls der Wand der Zelle (6).
